# EUROPÄISCHE PATENTSCHRIFT

(11) **EP 1 294 638 B1**
(45) Veröffentlichungstag und Bekanntmachung des Hinweises auf die Patenterteilung: **31.05.2006**
(21) Anmeldenummer: 01960273.9
(22) Anmeldetag: 06.06.2001
(51) Int. Cl.: C01B 15/00

(54) **VERFAHREN ZUM IMPRÄGNIEREN EINES GEGENSTANDES ODER STOFFES MIT EINER EIN OXIDATIONSMITTEL ENTHALTENDEN LÖSUNG**
METHOD FOR IMPREGNATING AN OBJECT OR SUBSTANCE WITH A SOLUTION CONTAINING AN OXIDATING AGENT
PROCEDE POUR IMPREGNER UN OBJET OU UNE SUBSTANCE AVEC UNE SOLUTION CONTENANT UN AGENT D'OXYDATION

(30) Priorität: 07.06.2000 DE 10028090
(43) Veröffentlichungstag der Anmeldung: 26.03.2003
(73) Patentinhaber: P & W Invest Vermögensverwaltungsgesellschaft MbH, 5020 Salzburg (AT)
(72) Erfinder: POLAK, Walter, A-5020 Salzburg (AT)
(74) Vertreter: Hagemann, Heinrich
(86) Internationale Anmeldenummer: PCT/EP2001/006406
(87) Internationale Veröffentlichungsnummer: WO 2001/094258

(56) Entgegenhaltungen:
- US-A- 5 008 106
- US-A- 5 227 168
- US-A- 5 310 548
- US-A- 5 668 185

## Beschreibung

Die Erfindung betrifft ein Verfahren zum Imprägnieren eines Gegenstandes oder Stoffes, bei dem dieser mit einer ein Oxidationsmittel enthaltenden Lösung in Kontakt gebracht wird.

Zur Reinigung von Flüssigkeiten und Gasen kommt der Filtration große Bedeutung zu. Unter Filtration soll hier ein Verfahren verstanden werden, bei dem das Abscheiden von Feststoffteilchen aus einer Flüssigkeit oder einem Gas mit Hilfe einer porösen Schicht (Filtermittel) erfolgt, die für die Flüssigkeit durchlässig ist, während die Feststoffe zurückgehalten werden. Die Wahl des dabei verwendeten Filtermaterials hängt außer von wirtschaftlichen Erwägungen von den physikalischen und chemischen Eigenschaften der Flüssigkeit bzw. des Gases sowie der auszufiltrierenden Trübe ab. Maßgebend für die Wahl des Filtermaterials sind der Zweck, den man mit der Filtration erreichen will (z.B. Trinkwasser, Kühlwasser, Atemluft usw.), die chemischen und physikalischen Eigenschaften des Filtergutes und der durch diese erforderliche Verlauf der Filtervorgangs (Filtrationsdauer, Druck, Temperatur und weitere Parameter). Um größte Wirtschaftlichkeit zu erreichen, ist es wichtig, das Filtermaterial den Eigenschaften des Filtergutes anzupassen. Häufig verwendete Filtermaterialien sind Siebe, Gewebe, wie z.B. aus Metall oder Natur- bzw. Kunstfasern, verfilzte Schichten, wie z.B. aus Papier oder Cellulose, poröse Massen, z.B. Keramik, Glas und ähnliche Materialien, sowie lockere Schüttungen, z.B. aus Kieselgur, Sand, Kies oder kohlehaltigen Materialien.

Bei der Filtrierung von Flüssigkeiten oder Gasen erfolgt bei Auswahl geeigneter Filtermaterialien ein weitgehendes Entfernen von partikelförmigen Verschmutzungen. Eine Reinigung gegenüber chemischen Verschmutzungen gelingt bei Einsatz solcher Filtrationsverfahren jedoch nicht, oder nur in geringem Umfang. Eine solche Reinigungswirkung ist jedoch für viele Anwendungen wünschenswert, um z.B. Flüssigkeiten oder Gase durch Entfernen übelriechender chemischen Verunreinigungen zu desodorieren. Zwar können chemische Verunreinigungen bei der Verwendung von Filtermaterialien wie z.B. Aktivkohle in einem gewissen Umfang durch Adsorption an das Filtermaterial dem zu reinigenden Medium entzogen werden, eine solche Reinigung durch Adsorption erfolgt jedoch meist nur in begrenztem Ausmaß, so dass die Reinigungswirkung für viele Anwendungen nicht befriedigend ist. Darüber hinaus kommt es zu einer relativ schnellen Erschöpfung der Reinigungskapazität des Filtermaterials.

Die EP-A-O 479 706 beschreibt ein Verfahren zur Behandlung von Auspuffabgasen durch eine aus drei hintereinandergeschalteten Filterelementen bestehende Vorrichtung. Die einzelnen Filterelemente enthalten dabei jeweils unterschiedlich behandelte Holzkohle. Mit dieser Vorrichtung soll zwar die Reduktion von chemischen Verunreinigungen in Auspuffabgasen gelingen, der Reinigungseffekt beschränkt sich jedoch auf einige bestimmte gasförmige Verunreinigungen, nämlich Kohlenmonoxid, Stickoxide und Kohtenwasserstoffe. Das beschriebene Verfahren ist daher nur zur Reinigung bestimmter Gase; namentlich der Auspuffabgase von Verbrennungskraftmaschinen, geeignet. Eine Reinigung von flüssigen Medien wird nicht beschrieben. Darüber hinaus wird die Wirtschaftlichkeit des Verfahrens durch den aufwendigen dreistufigen Aufbau der Filtervorrichtung eingeschränkt.

Starke Einschränkungen gelten auch bei der Verwendung von Filtrationsverfahren für Reinigungsaufgaben, bei denen eine weitgehende Entkeimung des zu reinigenden Mediums erreicht werden soll. Die Porengröße der üblicherweise verwendeten Filtermaterialien liegt deutlich über dem Durchmesser von Mikroorganismen, so dass eine hinreichende Abtrennung von mikrobiologischen Verunreinigungen durch diese Filtermaterialien nicht gelingt. Zur Entkeimung von Flüssigkeiten oder Gasen durch Filtrationsverfahren (Sterilfiltration) sind spezielle Filtermaterialien entwickelt worden, insbesondere Membranen mit entsprechend kleiner Porengröße. Diese Materialien sind jedoch sehr teuer und die mit Ihnen erzielbaren Durchlaufgeschwindigkeiten sind gering. Darüber hinaus kommt es insbesondere bei der Filtration von Medien, die auch gröbere Verunreinigungen enthalten, oft zu einer raschen Blockierung der Filter, die dann ersetzt oder nach aufwendigen Verfahren regeneriert werden müssen. Dies führt dazu, dass der Einsatz von Sterilfiltern bei Verfahren, die die Filtration großer Volumina von Flüssigkeiten oder Gasen erfordern, oft nicht wirtschaftlich ist.

Um eine Reinigung von flüssigen oder gasförmigen Medien in bezug auf sowohl partikelförmige Verschmutzungen als auch chemische und/oder mikrobiologische Kontaminierungen zu erreichen, werden daher oft Verfahren angewandt, die aus einer Abfolge von einem Filtrationsschritt und einem weiteren Verfahrensschritt, wie z.B. der Behandlung mit einem chemischen Desinfektionsmittel, bestehen. Neben dem erhöhten Aufwand aufgrund des aus mehreren Schritten bestehenden Verfahrens besteht dabei der Nachteil, dass die Dosierung z.B. des Desinfektionsmittels auf die jeweils vorliegende Art und den Grad der Verschmutzung angepaßt werden muß. Ein Einsatz des Desinfektionsmittels in zu hoher Konzentration führt nämlich neben den unerwünschten wirtschaftlichen Nachteilen zu, meist unerwünschten, Rückständen im gereinigten Medium. Ein Material, das die partikekeinigende Wirkung eines Filtermittels mit der keimtötenden und/oder chemisch dekontaminierenden Wirkung eines Desinfektionsmittels kombiniert liegt noch nicht vor. Auch für andere Verwendungsgebiete wäre eine solche Kombination aus den herkömmlichen Materialeigenschaften mit der desinfizierenden, oxidierenden und/oder desodorierenden Wirkung eines Desinfektionsmittels wünschenswert.

Die oben angesprochenen Nachteile des Standes der Technik werden auch nicht durch die Lehren der nachfolgend beschriebenen Patentschriften behoben: Die Lehre nach der US-A-5 227 168 bezieht sich auf ein Verfahren zur Behandlung einer Wunde, insbesondere einen antimikrobiellen Wundverband, in dem unter anderem stabilisiertes Chlordioxid zum Einsatz kommt. Hierbei wird ein antimikrobieller Wundverband mit einer ersten Schicht eines trockenen stabilisierten Chlordioxids und einer dazu benachbarten zweiten Schicht einer trockenen sauren Komponente zur Aktivierung des Chlordioxids bereitgestellt. Die erste Schicht des Wundverbands wird auf den Wundbereich aufgebracht, wodurch aufgrund der Gegenwart von Feuchtigkeit in der Wunde die Säurekomponente gasförmiges Chlordioxid zur Behandlung freisetzt.

Nach der Offenbarung der US-A-5 008 106 wird ein Verfahren zur Verringerung des mikrobiellen Befalls von Oberflächen mit einem wasserfreien Komplex von Polyvinylpyrrolidon (PVP) und H₂O₂ beschrieben. Es handelt sich um einen stabilen wasserfreien Komplex in Form eines einheitlichen, frei fließenden, feinen weißen Pulvers mit einem H₂O₂-Gehalt zwischen etwa 13 und 24%. Dieser wasserfreie PVP-H₂O₂-Komplex kann auf einen geeigneten Träger aufgebracht werden. Er wird durch die Gegenwart von Wasser aktiviert, das sich beispielsweise an der Oberfläche der Mikroorganismen befindet, wodurch H₂O₂ freigesetzt wird.

Die Lehre nach der US-A-5 310 548 beschäftigt sich mit einem Deodorant, das ein keramisches Material umfaßt, welches 5 bis 100 Gew.-% einer Calciumphosphatverbindung eines bestimmten Mol-Verhältnisses Calcium:Phosphor enthält, wobei das keramische Material aus Pulver, Granulaten, porösen Granulaten oder porösen Blöcken ausgewählt ist.

Schließlich beschreibt die US-A-5 668 185 ein Verfahren zur Herstellung einer Zusammensetzung, wobei ein hydrophiles Material, das ein Amin enthält, mit einem hydrophoben Material, das eine Säure freisetzen kann, gemischt wird und die gebildete Mischung im Wesentlichen wasserfrei ist. Diese Mischung wird der Einwirkung von Chlordioxid ausgesetzt, das mit dem Amin des hydrophilen Materials zu einem Iminiumchlorid reagiert, welches nach Hydrolyse des Reagenzes, das Säure freisetzt, Chlordioxid entwickelt.

Vor obigem Hintergrund lag der vorliegenden Erfindung die Aufgabe zugrunde, Materialien bereitzustellen, die die vorstehend genannten Nachteile des Standes der Technik vermeiden. Insbesondere sollen die nach dem erfindungsgemäßen Verfahren hergestellten Materialien als Filtermaterialien einsetzbar sein, die die Reinigung von Flüssigkeiten und/oder Gasen von partikelförmigen Verunreinigungen sowie von chemischen und/oder mikrobiologischen Kontaminationen in einem Verfahrensschritt erlauben. Die erfindungsgemäß hergestellten Materialien sollen die Reinigung flüssiger und/oder gasförmiger Medien bei großen Volumendurchsätzen zu geringen Kosten ermöglichen und zu keinen nennenswerten Rückständen im Filtrat führen.

Erfindungsgemäß wird diese Aufgabe dadurch gelöst, dass der Gegenstand oder Stoff mit einer chlordioxidhaltigen wässrigen Lösung zur Regenerierung und/oder zur Vermittlung desinfizierender, oxidierender und/oder desodorierender Eigenschaften in Kontakt gebracht wird, wobei die chlordioxidhaltige wässrige Lösung erhalten wird, indem eine einen pH-Wert ≤ 3 aufweisende sulfationenhaltige wässrige Lösung mit einer darin stabilen Peroxyverbindung versetzt wird und diese Lösung anschließend mit der wässrigen, alkalischen Lösung eines Chlorits vermischt wird, wobei der Gegenstand oder Stoff als kohlehaltiges Material und/oder textiles Material vorliegt.

Überraschenderweise hat es sich gezeigt, dass den Materialien durch diesen Imprägnierungsschritt die desinfizierenden, oxidierenden und/oder desodorierenden Wirkungen der chlordioxid- haltigen wässrigen Lösung stabil und dauerhaft verliehen werden. Insbesondere ist es überraschend, dass nach dem erfindungsgemäßen Verfahren behandelte Materialien die Oxidationsmittel so stabil absorbieren, dass die oxidierende, desinfizierende und/oder desodorierende Wirkung über längere Zeit, auch nach mehrfachem Kontakt mit Flüssigkeiten oder Gasen, erhalten bleiben. Dies gilt auch für Materialien, die selbst oxidierbar sind, wie z.B. Filterkohle oder textile Fasern. Nach dem erfindungsgemäßen Verfahren behandelte Gegenstände oder Stoffe erlauben, bei Einsatz als Filtermaterialien, die Reinigung flüssiger oder gasförmiger Medien von partikelförmigen Verunreinigungen sowie chemischen und/oder mikrobiologischen Kontaminationen in einem einzigen Verfahrensschritt. Es kommt dabei zu keinem nennenswerten "Ausbluten" der Filtermaterialien, die reinigende Wirkung bleibt vielmehr über mehrere Verwendungen hinweg erhalten.

Die erfindungsgemäß schandelten Materialien, beispielsweise pulvrig oder in Form von flächigen Gebilden, wie Geweben und Gewirken sind vorzugsweise nicht basisch eingestellt. Vielmehr ist es bevorzugt, dass sie neutral vorliegen. Jedoch ist es in Einzelfällen von Vorteil, was dem Fachmann im jeweiligen Anwendungsfall erkennbar ist, auch eine schwach saure Einstellung vorzunehmen.

Das erfindungsgemäße Verfahren eignet sich besonders zur Anwendung auf kohlehaltiges Material, textiles Material oder Verbandsmaterial. Bei der Anwendung des erfindungsgemäßen Verfahrens auf kohlehaltige Filtermaterialien hat es sich gezeigt, dass neben der Übertragung oxidierender, desinfizierender und/oder desodorierender Wirkung auf das Material überraschende weitere Effekte eintreten. So kommt es bei Imprägnierung bereits mehrfach gebrauchter und dadurch in ihrer Filtrationswirkung eingeschränkter Filterkohle zu einer Regenerierung des Filtermaterials. Durch diese Regenerierung werden die Materialeigenschaften der erfindungsgemäß behandelten Filterkohle so verändert, dass ihre Filtrationsleistung in bezug auf die Abtrennung von partikelförmigen Verunreinigung über nicht nach dem erfindungsgemäßen Verfahren behandelter frischer Filterkohle liegt. Durch das erfindungsgemäße Verfahren werden der Filterkohle also nicht nur neue Eigenschaften verliehen, sondern darüber hinaus werden die herkömmlichen Materialeigenschaften der Filterkohle weiter gesteigert. Durch die Möglichkeit, gebrauchte Filterkohle zu regenerieren, werden außerdem wirtschaftliche Vorteile erziehlt. Besonders bevorzugt wird das erfindungsgemäße Verfahren auf Aktivkohle angewendet.

Bei der im erfindungsgemäßen Verfahren eingesetzten chloroxidhaltigen wässrigen Lösungen handeld es sich um eine chlordioxidhaltige wässrige Lösung. Da es sich bei Chlordioxid um eine chemisch instabile und schwer handhabbare Substanz handelt, ist es vorteilhaft, dass ein großer Teil des Chlordioxids nicht in freier Form vorliegt, sondern chemisch gebunden in Form einer chemischen Spezies, aus der Chlordioxid stetig nachgebildet wird. Eine solche Substanz ist das Tetrachlordecaoxid-Komplex-Dianion . [Cl₄O₁₀]²⁻, das unter der ELINCS-Nummer 420-970-2 dokumentiert ist. Das Tetrachlordecaoxid-Komplex-Dianion steht mit dem Chlordioxid in einem Gleichgewicht, so dass eine Lösung des Tetrachlordecaoxid-Komplex-Dianions stets eine gewisse Menge an Chlordioxid enthält, das bei Verbrauch nachgebildet wird. In einer bevorzugten Ausführungsform liegt daher in der chlordioxidhaltigen wässrigen Lösung das Tetrachlordecaoxid-Komplex-Dianion [Cl₄O₁₀]²⁻ vor.

Die Tetrachlordecaoxid-Komplex-Dianionen und Chlordioxid enthaltende Lösung wird erhalten, indem eine einen pH-Wert ≤ 3 aufweisende sulfationenhaltige wässrige Lösung mit einer darin stabilen Peroxyverbindung versetzt und diese Lösung anschließend mit der wässrigen, alkalischen Lösung eines Chlorits vermischt wird. Die sulfationenhaltige wässrige Lösung wird vorzugsweise mit einer Menge einer darin stabilen Peroxyverbindung versetzt, die eine Konzentration an Peroxyverbindungen im Endprodukt von etwa 0,001 bis 0,01 mol/l ergibt. Als besonders vorteilhaft hat es sich erwiesen, die sulfationenhaltige wässrige Lösung mit einer darin stabilen Peroxyverbindung zu versetzen und diese Lösung anschließend mit der wässrigen, alkalischen Lösung eines Chlorits in einer Menge zu vermischen, dass sich ein pH-Wert von über 7,0, insbesondere zwischen 7,5 und 8,0, einstellt.

Es hat sich gezeigt, dass es besonders vorteilhaft ist, als Peroxyverbindung eine anorganische Peroxyverbindung in Form von Wasserstoffperoxid, eines Persulfats, Percarbonats, Perborats oder eines Peroxids eines Alkali- oder Erdalkalimetalls zu verwenden. Als Chlorit wird vorzugsweise ein Alkali- und/oder Erdaikalichlorit eingesetzt. Besonders vorteilhafte Ergebnisse stellen sich dann ein, wenn die sulfationenhaltige wässrige Lösung einen pH-Wert ≤ 1 aufweist.

Wenn die eingesetzten wässrigen Ausgangslösungen lediglich eine geringe Carbonathärte zeigen bzw. mit demineralisiertem Wasser hergestellt werden, empfiehlt es sich, unter einer Inertgasatmosphäre zu arbeiten, da es in Abwesenheit einer Schutzgasschicht zwischen dem geringfügig ausgasenden Chlordioxid und Luft zur Bildung von explosiven Luft/Chlordioxidgemischen kommen kann. Luft/Chlordioxidgemische neigen bei einem Verhältnis der Bestandteile Luft : Chlordioxid von etwa 10 : 1 zu einem explosionsartigen Zerfall des Chlordioxids in Chlor und Sauerstoff. Bei wässrigen Ausgangslösungen mittlerer bzw. hoher Carbonathärte (> etwa 7 Grad bzw. > etwa 1,3 mmol/l Carbonathärte) ist der Einsatz eines Inertgases im allgemeinen nicht nötig, da sich eine Art Schutzgasschicht aus Kohlendioxid bildet. Vorzugsweise wird daher zur Herstellung der sulfationenhaltigen wässrigen Lösung, die zur Bildung der Tetrachlordecaoxid-Komplex-Dianionen und Chlordioxid enthaltenden Lösung eingesetzt werden soll, mineralisiertes Wasser verwendet.

Besonders bevorzugt enthält die Tetrachlordecaoxid-Komplex-Dianionen und Chlordioxid enthaltende Lösung ein wasserlösliches Phosphat, da die Menge an Peroxyverbindungen herabgesetzt werden kann, wenn der Fertiglösung ein wasserlösliches Phosphat, z.B. Natriummethapolyphosphat, in geringer Menge einverleibt wird.

Die Konzentration, mit der die chlordioxidhaltige wässrige Lösung zum Imprägnieren der Materialien verwendet wird, hängt von verschiedenen Faktoren ab, unter anderem von der Wahl des Materials. Bei zu geringen Konzentrationen werden den imprägnierten Materialien keine hinreichenden oxidierenden, desinfizierenden und/oder desodorierenden Eigenschaften verliehen. Zu hohe Konzentrationen führen andererseits zu einer geringen Effizienz des Imprägnierungsvorgangs, da ein Großteil des Chlordioxids/ Tetrachlordecaoxid-Dianions nicht an das Material gebunden wird. In einer bevorzugten Ausführungsform wird die chlordioxidhaltige wässrige Lösung mit dem zu imprägnierenden Gegenstand oder Stoff in einer Konzentration in Kontakt gebracht, die eine Anfangskonzentration an Chlorit von etwa 1 bis 2000 mmol/l, insbesondere etwa 20 bis 400 mmol/l, entspricht.

Die Erfindung richtet sich auch auf Gegenstände oder Stoffe, die nach dem erfindungsgemäßen Verfahren erhältlich sind. Für die nach dem erfindungsgemäßen Verfahren imprägnierten Materialien gibt es eine Vielzahl von Verwendungen. Insbesondere sind diese zum Einsatz als Filtermaterialien geeignet. Besonders bevorzugt ist die Verwendung der so hergestellten Filtermaterialien zur keimtötenden, desodorierenden und/oder oxidierenden Reinigung von Flüssigkeiten oder Gasen. Darüber hinaus sind die erfindungsgemäß hergestellten Gegenstände oder Stoffe auch zur Verwendung als desinfizierend wirdendes textiles Material geeignet.

Zusammenfassend läßt sich feststellen, dass das erfindungsgemäße Verfahren die Herstellung von imprägnierten Materialien ermöglicht, die im Vergleich zum Stand der Technik vorteilhafte Eigenschaften aufweisen. Dies gilt insbesondere beim Einsatz der nach dem erfindungsgemäßen Verfahren hergestellten Materialien als Filtermittel. Insbesondere können Reinigungsaufgaben, bei denen es um Abtrennung partikelförmi-ger Verschmutzungen sowie die Dekontamination bezüglich mikrobiologischer und/oder chemischer Verunreinigungen geht mit Hilfe dieser Materialien in einem einzigen Verfahrensschritt wirksam und kostengünstig bewältigt werden. Darüber hinaus hat das erfindungsgemäße Verfahren den Vorteil, dass keine besonderen Maßnahmen zur richtigen Dosierung eines Desinfektionsmittels getroffen werden müssen. Durch das imprägnierte Filtermaterial findet vielmehr automatisch eine geeignete Dosierung statt. Dies führt zu nur geringen Rückständen der eingesetzten Chemikalien im filtrierten Medium. Darüber hinaus eignet sich das erfindungsgemäße Verfahren zum Regenerieren von Materialien.

Nachfolgend soll die Erfindung anhand von Beispielen noch näher erläutert werden:

### Beispiel 1: Herstellung einer Tetrachlordecaoxid-Komplex-Dianionen und Chlordioxid enthaltenden Lösung

In 11 sulfathaltiges Wasser (Carbonathärte 18 Grad bzw. 3,2 mmol/l) eines pH-Wertes von 0,5 werden 0,5g einer 30 Gew.-%igen Wasserstoffperoxidlösung gegeben. Zu dieser Lösung werden unter gutem Rühren 0,9 1 einer handelsüblichen Natriumchloritlösung (etwa 300 Natriumchlorit/1) hinzugefügt. Dabei durchläuft die Lösung eine braune Färbung, die beim Überschreiten des pH-Wertes von 7 nach Ablauf der Stabilisierungsreaktion in eine helle lindgrüne Farbe umschlägt. Hierbei stellt sich in der Lösung ein pH-Wert von 7,5 ein.

Die so hergestellte Lösung wird im folgenden als Lösung 1 bezeichnet.

### Beispiel 2: Imprägnierung eines Aktivkohlematerials nach dem erfindungsgemäßen Verfahren

Die in Beispiel 1 hergestellte Lösung 1 wurde in verschiedenen Verdünnungen zur Imprägnierung von Aktivkohleproben verwendet. Bei den Aktivkohleproben handelt es sich um Schwimmbad-Filterkohle, wobei verunreinigte, bereits mehrfach als Filterkohle verwendete Aktivkohle eingesetzt wurde. Um die regenerierende Wirkung des erfindungsgemäßem Verfahren zu demonstrieren, wurde die NH₄⁺ Konzentration der in Zwischenpartikelvolumen der Proben befindliche Flüssigkeit vor und nach der Behandlung gemessen. Im Bereich der Schwimmbad-Filterkohlen ist die NH₄⁺⁻Konzentration eine zuverlässiger Indikator für die chemische Belastung der Filterkohle nach längerem Gebrauch, da es sich bei den typischen Belastungen von Schwimmbadwasser häufig um stickstoffhaltige Substanzen handelt (Hautschuppen, Haare usw.).

Unterschiedliche Chargen verunreinigter Aktivkohle (AK1, AK2 und AK3) wurden jeweils in mehrere Proben aufgeteilt. Einzelne Proben wurden dann nach Entfernen eventuell vorhandenen überschüssigen Wassers mit Lösungen 1 entweder unverdünnt oder mit den Verdünnungen 1:10 und 1:100 versetzt. Für die Regenerierung der Aktivkohle wurde ein Volumen an Lösung 1 verwendet, das etwa die Hälfte des Volumens ausmacht, welches die Aktivkohle selbst einnimmt. Bei dieser Menge wird das Zwischepartikelvolumen der Aktivkohle vollständig ausgefüllt und die Aktivkohle ist mit Flüssigkeit knapp überschichtet. Nach 24-stündiger Einwirkungszeit ließ man die Lösung ablaufen und spülte mit Trinkwasser nach. Zu Vergleichszwecken wurde die gleiche Behandlung auch mit Wasser anstelle von Lösung 1 durchgeführt. Zur Bestimmung der regenerierenden Wirkung wurden bei allen Proben die NH₄⁺⁻Konzentrationen vor und nach der Behandlung gemessen.

**Tabelle 1: Ammoniumionen-Konzentration verschiedener Aktivkohleproben vor und nach Behandlung mit Lösung 1 in unterschiedlichen Verdünnungen oder Wasser**

| Aktivkohleprobe | Unbehandelt | Wasser | Lösung 1 1:1 | Lösung 1 1:10 | Lösung 1 1:100 |
|---|---|---|---|---|---|
| AK1 | 9,6 | 5,37 | 3,36 | 1,2 | 3,06 |
| Ak 2 | 16,0 | 7,5 | 2,2 | 2,01 | 3,8 |
| AK 3 | 15,2 | 9,63 | 4,68 | 1,56 | 6,7 |

Bei der Behandlung mit 1:10 verdünnter Lösung 1 ergab sich ein Regenerierungseffekt, der einer 8 bis 10-fachen Verminderung der Ammoniumionen-Konzentration entspricht. Verglichen mit der Behandlung mit reinem Wasser wurde eine Verminderung der Ammoniumionen-Konzentration um das 4 bis 6-fache erzielt. Eine Regenerierung mit unverdünnter Lösung 1 lieferte keine besseren Ergebnisse als die bei 1:10 Verdünnung. Selbst bei einer Regenerierung mit der 1: 100 verdünnten Lösung 1 wurden bei allen drei verunreinigten Aktivkohleproben noch bessere Ergebnisse erzielt, als bei der Verwendung von Wasser. Der Regenerierungseffekt war jedoch deutlich schwächer als der im Falle der 1:10-Verdünnung.

### Beispiel 3 Verminderung der mikrobiologischen Belastung der Ak-tivkohleproben durch das erfindungsgemäße Verfahren

Um die regenerierende Wirkung des erfindungsgemäßem Verfahrens in bezug auf mikrobiologische Belastungen zu demonstrieren, wurde auch die Keimbelastung der Aktivkohleproben AK1, AK2 und AK3 vor und nach Behandlung mit einer 1:10 Verdünnung von Lösung 1 gemessen. Dabei wurde sowohl die gesamte Keimzahl, als auch die Zahl der Enterobakterien und der Hefen/Schimmelpilze jeweils pro ml bestimmt.

**Tabelle 2: Gesamtkeimzahl pro ml der Aktivkohleproben vor und nach Behandlung mit einer 1:10-Verdünnung von Lösung 1**

| Probe | Gesamtkeimzahl pro ml unbehandelt | Gesamtkeimzahl pro ml nach Behandlung mit 1:10-Verdünnung von Lösung 1 |
|---|---|---|
| AK1 | 5 x 10³ | < 10 |
| AK2 | 8 x 10² | < 10 |
| AK3 | 9,8 x 10⁵ | < 10 |

**Tabelle 3: Anzahl der Enterobakterien pro ml der Aktivkohleproben vor und nach Behandlung mit einer 1:10-Verdünnung von Lösung 1**

| Probe | Anzahl der Enterobakterien pro ml unbehandelt | Anzahl der Enterobakterien pro ml nach Behandlung mit 1:10-Verdünnung von Lösung 1 |
|---|---|---|
| AK1 | 10³ | n.n. |
| AK2 | < 10² | n.n. |
| AK3 | 5 x 10⁴ | n.n. |

| | | |
|---|---|---|
| n. n. = nicht nachweisbar | | |

**Tabelle 4: Anzahl der Hefen/Schimmelpilze pro ml der Aktivkohleproben vor und nach der Behandlung mit einer 1:10-Verdünnung von Lösung 1**

| Probe | Anzahl der Hefen/Schimmelpilze pro ml unbehandelt | Anzahl der Hefen/Schimmelpilze pro ml nach Behandlung mit 1:10-Verdünnung von Lösung 1 |
|---|---|---|
| AK1 | 30/20 | n.n./n.n. |
| AK2 | < 10/400 | n. n. /n. n. |
| AK3 | n.b. | n.n./n.n. |

| | | |
|---|---|---|
| n.n. = nicht nachweißbar | | |
| n.b. = nicht bestimmt | | |

Die Ergebnisse zeigen, dass mit einer 1:10-Verdünnung von Lösung 1 eine vollständige Regenerierung verunreinigter Filterkohle bezüglich der mikrobiologischen Belastung gelingt. Eine gemäß Beispiel 2 imprägnierte Aktivkohle zeigt bei der keimtötenden, desodorierenden und/oder oxidierenden Reinigung von Flüssigkeiten und/oder Gasen ausgezeichnete Effekte.

## Patentansprüche

1. Verfahren zum Imprägnieren eines Gegenstandes oder Stoffes durch Inkontaktbringen mit einer ein Oxidationsmittel enthaltenden Lösung, **dadurch gekennzeichnet, daß** der Gegenstand oder Stoff mit einer chlordioxidhaltigen wässrigen Lösung zur Regenerierung und/oder zur Vermittlung desinfizierender, oxidierender und/oder desodorierender Eigenschaften in Kontakt gebracht wird, wobei die chlordioxidhaltige wässrige Lösung erhalten wird, indem eine einen pH-Wert ≤ 3 aufweisende sulfationenhaltige wässrige Lösung mit einer darin stabilen Peroxyverbindung versetzt wird und diese Lösung anschließend mit der wässrigen, alkalischen Lösung eines Chlorits vermischt wird, wobei der Gegenstand oder Stoff als kohlehaltiges Material und/oder textiles Material vorliegt.

2. Verfahren nach Anspruch 1, **dadurch gekennzeichnet, daß** als zu imprägnierender Stoff Aktivkohle verwendet wird.

3. Verfahren nach Anspruch 2, **dadurch gekennzeichnet, daß** als chlordioxidhaltige wässrige Lösung eine Tetrachlordecaoxid-Komplex-Dianion [Cl₄O₁₀]²⁻-haltige Lösung verwendet wird.

4. Verfahren nach Anspruch 3, **dadurch gekennzeichnet, daß** die sulfationenhaltige wässrige Lösung mit einer solchen Menge einer darin stabilen Peroxyverbindung versetzt wird, daß sich eine Konzentration an Peroxyverbindung in der Lösung von 0,001 bis 0,01 mol/l ergibt.

5. Verfahren nach Anspruch 4, **dadurch gekennzeichnet, daß** die sulfationenhaltige wässrige Lösung mit einer darin stabilen Peroxyverbindung versetzt und diese Lösung anschließend mit der wässrigen, alkalischen Lösung eines Chlorits in einer Menge vermischt wird, daß sich ein pH-Wert von über 7,0, insbesondere zwischen 7,5 und 8,0, einstellt.

6. Verfahren nach mindestens einem der Ansprüche 3 bis 5, **dadurch gekennzeichnet, daß** als Peroxyverbindung eine anorganische Peroxyverbindung in Form von Wasserstoffperoxid, eines Persulfats, Percarbonats, Perborats oder eines Peroxids eines Alkali- oder Erdalkalimetalls verwendet wird.

7. Verfahren nach mindestens einem der Ansprüche 3 bis 6, **dadurch gekennzeichnet, daß** als Chlorit ein Alkali- und/oder Erdalkalichlorit eingesetzt wird.

8. Verfahren nach mindestens einem der Ansprüche 3 bis 7, **dadurch gekennzeichnet, daß** die sulfationenhaltige wässrige Lösung einen pH-Wert ≤ 1 aufweist.

9. Verfahren nach mindestens einem der Ansprüche 3 bis 8, **dadurch gekennzeichnet, daß** zur Herstellung der sulfationenhaltigen wässrigen Lösung mineralisiertes Wasser verwendet wird.

10. Verfahren nach mindestens einem der Ansprüche 3 bis 9, **dadurch gekennzeichnet, daß** die chlordioxidhaltige wässrige Lösung ein wasserlösliches Phosphat enthält.

11. Verfahren nach mindestens einem der Ansprüche 3 bis 10, **dadurch gekennzeichnet, daß** die chlordioxidhaltige wässrige Lösung, mit der der zu imprägnierende Gegenstand oder Stoff in Kontakt gebracht wird, eine Anfangskonzentration an Chlorit von 1 bis 2000 mmol/l aufweist.

12. Verwendung des imprägnierten Gegenstandes oder Stoffes, erhältlich nach einem Verfahren gemäß mindestens einem der Ansprüche 1 bis 11 zur keimtötenden, desodorierenden und/oder oxidierenden Reinigung von Flüssigkeiten oder Gasen.

13. Verwendung des imprägnierten Gegenstandes oder Stoffs, erhältlich nach einem Verfahren nach mindestens einem der Ansprüche 1 bis 11, als desinfizierend wirkendes textiles Material.

## Claims

1. A method of impregnating an object or substance by bringing it into contact with a solution containing an oxidising agent, **characterised in that** the object or substance is brought into contact with an aqueous solution containing chlorine dioxide in order to regenerate and/or impart disinfectant, oxidising and/or deodorising properties, the aqueous solution containing chlorine dioxide being obtained by mixing an aqueous solution containing sulphate ions having a pH value ≤ 3 with a peroxy compound, which is stable therein and then mixing this solution with the aqueous, alkaline solution of a chlorite, the object or substance being present in the form of a carbon-containing material and/or textile material.

2. A method as claimed in Claim 1 that active carbon is used as the substance to be impregnated.

3. A method as claimed in Claim 2, **characterised in that** a solution containing tetrachlorodecaoxide-complex-dianion (Cl₄O₁₀)² is used as the chlorine dioxide-containing aqueous solution.

4. A method as claimed in Claim 3, **characterised in that** the aqueous solution containing sulphate ions is mixed with such an amount of a peroxy compound, which is stable therein, that a concentration of peroxy compound in the solution of 0.0001 to 0.01 mol/l is produced.

5. A method as claimed in Claim 4, **characterised in that** the aqueous solution containing sulphate ions is mixed with a peroxy compound, which is stable therein and this solution is then mixed with the aqueous, alkaline solution of a chlorite in an amount that a pH value of above 7.0, particularly between 7.5 and 8.0, is produced.

6. A method as claimed in at least one of Claims 3 to 5, **characterised in that** an inorganic peroxy compound in the form of hydrogen peroxide, a persulphate, percarbonate, perborate or a peroxide of an alkali metal or alkaline earth metal is used as the peroxy compound.

7. A method as claimed in at least one of Claims 3 to 6, **characterised in that** an alkali chlorite and/or alkaline earth chloride is used as the chlorite.

8. A method as claimed in at least one of Claims 3 to 7, **characterised in that** the aqueous solution containing sulphate ions has a pH value of ≤ 1.

9. A method as claimed in at least one of Claims 3 to 8, **characterised in that** mineralised water is used to produce the aqueous solution containing sulphate ions.

10. A method as claimed in at least one of Claims 3 to 9, **characterised in that** the aqueous solution containing chlorine dioxide includes a water-soluble phosphate.

11. A method as claimed in at least one of Claims 3 to 10, **characterised in that** the aqueous solution containing chlorine dioxide, with which the object or substance to be impregnated is brought into contact, has an initial concentration of chlorite of 1 to 2000 mmol/l.

12. The use of the impregnated article or substance obtainable by a method as claimed in at least one of Claims 1 to 11 for the bactericidal, deodorising and/or oxidising purification of liquids or gases.

13. The use of the impregnated article or substance obtainable by a method as claimed in at least one of Claims 1 to 11, as a textile material with a disinfectant action.

## Revendications

1. Procédé d'imprégnation d'un objet ou d'une substance par mise en contact avec une solution contenant un agent oxydant, **caractérisé en ce que** l'objet ou la substance est mis en contact avec une solution aqueuse contenant du dioxyde de chlore destinée à régénérer et/ou à conférer des propriétés désinfectantes, oxydantes et/ou désodorisantes, la solution aqueuse contenant du dioxyde de chlore étant obtenue par addition, à une solution aqueuse chargée d'ions sulfate de pH inférieur ou égal à 3, d'un composé peroxy stable dans cette solution, puis mélange de cette dernière avec une solution aqueuse alcaline d'un chlorite, l'objet ou la substance existant comme matière carbonée et/ou comme matière textile.

2. Procédé suivant la revendication 1, **caractérisé en ce qu'**on utilise du charbon actif comme matière à imprégner.

3. Procédé suivant la revendication 2, **caractérisé en ce qu'**on utilise comme solution aqueuse contenant du dioxyde de chlore une solution contenant le dianion complexe décaoxyde de tétrachlore [Cl₄O₁₀]²⁻.

4. Procédé suivant la revendication 3, **caractérisé en ce que** la solution aqueuse chargée d'ions sulfate est additionnée d'un composé peroxy qui y est stable, en une quantité choisie de manière à établir dans la solution une concentration en composé peroxy de 0,001 à 0,01 mol/l.

5. Procédé suivant la revendication 4, **caractérisé en ce que** la solution aqueuse chargée d'ions sulfate est additionnée d'un composé peroxy qui y est stable et cette solution est ensuite mélangée avec la solution aqueuse alcaline d'un chlorite en une quantité telle que s'établisse un pH de valeur supérieure à 7,0, en particulier entre 7,5 et 8,0.

6. Procédé suivant au moins l'une des revendications 3 à 5, **caractérisé en ce qu'**on utilise comme composé peroxy un composé peroxy inorganique sous forme de peroxyde d'hydrogène, d'un persulfate, d'un percabonate, d'un perborate ou d'un peroxyde d'un métal alcalin ou alcalino-terreux.

7. Procédé suivant au moins l'une des revendications 3 à 6, **caractérisé en ce qu'**on utilise comme chlorite un chlorite de métal alcalin et/ou de métal alcalino-terreux.

8. Procédé suivant au moins l'une des revendications 3 à 7, **caractérisé en ce que** la solution aqueuse chargée d'ions sulfate présente un pH de valeur inférieure ou égale à 1.

9. Procédé suivant au moins l'une des revendications 3 à 8, **caractérisé en ce qu'**on utilise une eau minéralisée pour préparer la solution aqueuse chargée d'ions sulfate.

10. Procédé suivant au moins l'une des revendications 3 à 9, **caractérisé en ce que** la solution aqueuse chargée de dioxyde de chlore contient un phosphate hydrosoluble.

11. Procédé suivant au moins l'une des revendications 3 à 10, **caractérisé en ce que** la solution aqueuse chargée de dioxyde de chlore avec laquelle l'objet ou la substance à imprégner est mis en contact, présente une concentration initiale en chlorite de 1 à 2000 mmol/l.

12. Utilisation de l'objet ou substance imprégné obtenu selon un procédé conforme à au moins l'une des revendications 1 à 11 pour l'épuration germicide, désodorisante et/ou oxydante de liquides ou de gaz.

13. Utilisation de l'objet ou substance imprégné obtenu par un procédé selon au moins l'une des revendications 1 à 11 comme matière textile à action désinfectante.
